# EUROPEAN PATENT SPECIFICATION

(11) **EP 2 031 266 B1**
(45) Date of publication and mention of the grant of the patent: **12.05.2010**
(21) Application number: 08425184.2
(22) Date of filing: 20.03.2008
(51) Int. Cl.: F16D 65/12

(54) **Disc for self-ventilating disc brake**
Selbstbelüftender Scheibenbremsrotor
Rotor de frein à disques à autoventilation

(30) Priority: 29.08.2007 IT BS20070126
(43) Date of publication of application: 04.03.2009
(73) Proprietor: Fonderia di Torbole S.p.A., 24122 Bergamo (IT)
(72) Inventor: Bertoli, Gianbattista c/o Fonderia di Torbole S.p.A., 24122 Bergamo (IT); Bontempi, Gianpietro c/o Fonderia di Torbole S.p.A., 24122 Bergamo (IT)
(74) Representative: Pulieri, Gianluca Antonio

(56) References cited:
- EP-A- 1 445 507
- DE-B- 1 038 593
- GB-A- 2 024 966
- US-B1- 6 260 669
- US-B1- 6 505 723

## Description

The present invention relates to a disc for self-ventilating disc brake, in particular of the type with dual braking band, one whereof integral to a central bell or hub.

In the prior art it is known to use discs for self-ventilating disc brakes for engine-driven vehicles, but not exclusively, which allow keeping the braking capacity of the system almost unchanged even after an extended and intensive use. By their use, in fact, a better thermal exchange with air is obtained, which passes for example between the pair of braking bands, so that the heat resulting from the friction of the braking is more effectively subtracted from such bands, preventing the overheating thereof.

During the wheel rotation, these devices suck air from the centre of the disc and convey it into ducts that lead on the radially outermost end relative to the axis of rotation of the wheel. The air passage through such ducts allows an effective heat subtraction from the braking bands, e.g. as explained in US 6,505,723 B1.

It is therefore clear that the morphology of the mentioned ducts is a critical variable in the design of these devices, also because it influences the resistance of the braking bands to the mechanical stresses and to the thermal expansions.

The duct morphologies known in the art are substantially of three types: radial, curvilinear or with pins.

The discs as they are currently made in any case are not free from problems that limit performance, safety and comfort thereof.

In particular, the above duct shapes do not allow optimal heat removal, so that a partial evaporation of the brake fluid may occur (a phenomenon known as "vapour lock") and a consequent dangerous extension of the brake pedal stroke.

Moreover, the known morphologies do not prevent a significant deformation of the braking tracks due to the thermal expansions of the duct walls, with formation of disc cracks, vibrations and noise during braking, besides the loss of system efficiency.

Moreover, it often occurs that the braking track not integral to the hub heats more than the integral braking track, so it constitutes a thermal unevenness with consequent vibrations during braking.

Finally, in the case of ducts with curvilinear pattern, it is necessary to have a right-hand disc and a left-hand disc.

The present invention therefore aims to at least partly solve the prior art drawbacks mentioned herein before.

Such object is achieved by a disc for self-ventilating disc brake according to claim 1.

Further advantages may further be achieved by the additional features of the dependent claims.

The device object of the present invention shall now be described in detail, with the aid of the annexed drawings, wherein:

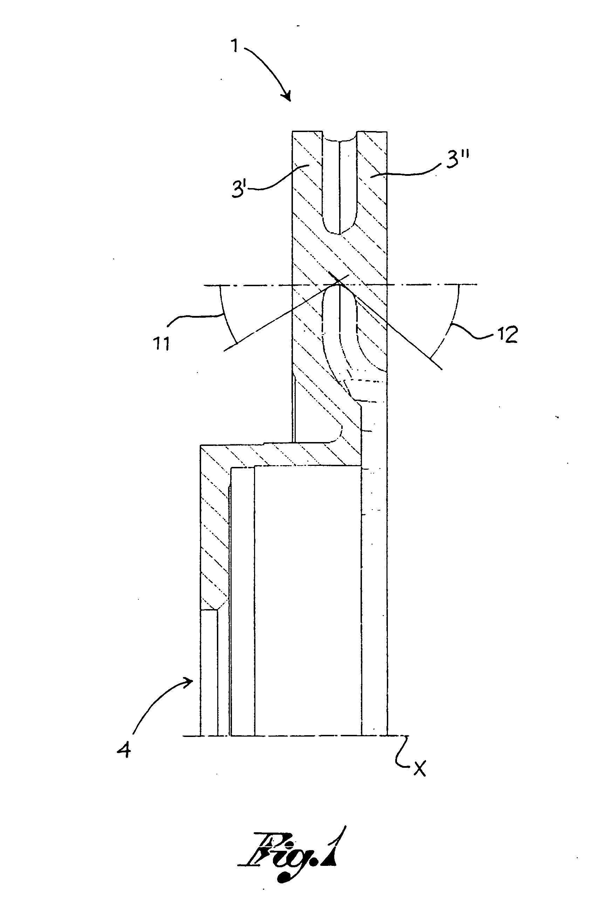

- figure 1 shows a partial cross-sectional view of the disc according to the invention;

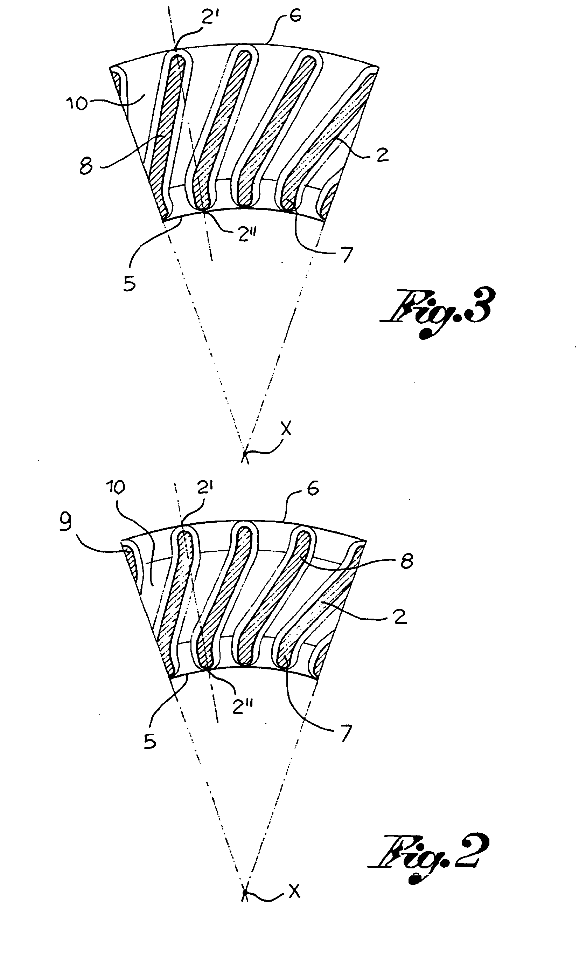

- figure 2 shows a partial cutaway view of a disc at the level of the finning between the braking bands, according to a first possible embodiment; and
- figure 3 shows a partial cutaway view of a disc at the level of the finning between the braking bands, according to a further possible embodiment.

With reference to the above tables, reference numeral 1 globally indicates a disc for self-ventilating disc brake of the type with two braking bands 3', 3".

At least one braking band 3' is connected to a central bell or hub 4 with rotation axis X.

The braking bands 3', 3" are parallel to each other, connected and reciprocally spaced by fins 2.

Fins 2 extend in radial direction relative to the rotation axis X between an inner end 2" and an outer end 2'.

The radial inlet of fins 2 is a fundamental parameter to ensure a strong self-ventilating effect, but above all to ensure the same aerodynamic, and thus thermal, behaviour of the disc in both rotation directions.

In a possible embodiment, the inner ends 2" of the fins are distributed along an inner circumference 5 and preferably, with constant pitch.

As an alternative or in addition, the outer ends 2' of the fins are distributed along an outer circumference 6. Preferably, also the distribution of the fins along the outer circumference 6 has a constant pitch.

According to a preferred embodiment of the teaching, the inner 5 and outer 6 circumferences substantially coincide with inner and outer circular edges that radially delimit the braking bands 3', 3". The braking bands therefore exhibit a circular crown shape.

According to a possible embodiment, each pair of adjacent fins 2 defines at least one cooling duct 10, which exhibits an air passage section radially increasing outwards.

In other words, moving away from the rotation axis X, fins 2 diverge from each other increasing the air passage section and, as a consequence, also the exchange surface between the braking band and the air, improving at the same time the effect of heat subtraction from the band and the centrifugal pump effect, whereof more will be said hereinafter.

The set of cooling ducts 10 defines the ventilation chamber of the brake disc.

The cooling ducts 10 are suitable for sucking cold air from the centre of the disc brake, conveying it into themselves in order cool the braking bands and finally ejecting the heated air through the open ends thereof on the outer circumference 6.

In other words, the rotating disc brakes use the centrifugal pump effect, an effect accentuated by the disc structure illustrated hereinafter.

Each fin 2 comprises, starting from the inner end 2", a first radial portion 7 and a second portion 8, inclined relative to said first portion.

In a possible embodiment, the second inclined portion 8 extends up to the outer end 2' of fin 2.

In a further possible embodiment, each fin 2 externally ends with a third radial portion 9.

Preferably, the width of the first radial portion 7 is equal to 5-20% relative to the radial extension of the braking bands and even more preferably, it is equal to 8-10%.

According to an embodiment, the inclination of the inclined portion 8 of fins 2 is such as to ensure the support of a brake pad on at least a portion of two adjacent fins 2, preferably on two whole fins.

According to a preferred embodiment of the invention, the outer end 2" and the inner end 2' of each pair of adjacent fins 2 are aligned radially.

Such inclinations of the fins have fundamental importance in order to become an obstacle to the propagation of cracks in braking bands.

The contact surface of fins 2 to the braking band 3' connected to the central bell or hub 4 is smaller than the contact surface of the fins to the other braking band 3".

This asymmetrical distribution of the contact surfaces allows a better conduction of the friction heat through both braking bands, allowing a better heat distribution than in the prior art discs and preventing the forming of excessive temperature gradients between the inner band 3' and the outer band 3".

In a possible embodiment, the contact surface of fins 2 to the braking band 3' connected to the central bell or hub 4 occupies between 45% and 52% of the total inner surface of said band 3'.

As an alternative or in addition, the contact surface of fins 2 to the braking band 3" not connected to the central bell or hub 4 occupies between 52% and 60% of the total inner surface of said band 3".

In an embodiment variation, each fin is connected to each braking band 3', 3" through a connecting surface whose tangent forms an angle 11, 12 relative to an axis parallel to the rotation axis X.

Usually, the contact angles 11, 12 are also called draft angles in jargon. In fact, according to a possible embodiment, disc 1 is obtained by fusion, and the connecting surfaces are given by the shakeout of the molten disc.

In an advantageous embodiment variation, angle 12 formed with band 3" not connected to the central bell or hub 4 is greater than angle 11 formed with band 3' connected to the central bell or hub 4.

The presence of different draft angles on the two contact surfaces with the braking bands 3', 3" explains the different occupation percentage of fins 2 on the two braking bands 3', 3".

In the light of the above, it is an important technical result that an asymmetrical distribution of the heat, on asymmetrical braking bands (band 3' is directly connected to the central bell or hub 4, whereas the outer band 3" is not) results in a symmetrical temperature in the two braking bands 3', 3".

Preferably, angle 12 formed with band 3" not connected to the central bell or hub 4 is equal to two to six times angle 11 formed with band 3' connected to the central bell or hub 4.

According to an even further embodiment, a braking band 3' is integral to the central bell or hub 4.

Innovatively, the disc for disc brake object of the present invention allows a lower overheating of the disc also during an extended and intensive use, preventing the dangerous fading effect.

Innovatively, moreover, the self-ventilating effect is equally effective in both rotation directions, making unnecessary the management of two discs for ensuring the same performance.

Advantageously, the finding allows an even thermal distribution on both braking bands obtained thanks to the greater percentage of anchoring between the fin and the band not directly connected to the central bell or hub.

Moreover, it allows minimising the formation of cracks on the braking bands, with a considerable advantage for the functionality, the use reliability and the comfort for the user.

Finally, the disc object of the invention considerably decreases noise when braking, especially compared to the straight fin discs of the prior art.

A man skilled in the art may make several changes, adjustments and replacements of elements with other functionally equivalent ones to the embodiments of the disc described above in order to meet incidental needs, without departing from the scope of the following claims.

## Claims

1. Disc (1) for self-ventilating disc brake of the type with two braking bands (3', 3"), at least one (3') thereof connected to a central bell or hub (4) with rotation axis (X), wherein said braking bands (3', 3") are parallel to each other, connected and reciprocally spaced by fins (2), wherein said fins extend in radial direction relative to the rotation axis (X) between an inner end (2") and an outer end (2'), wherein each fin (2) comprises, starting from the inner end (2"), a first radial portion (7) and a second portion (8) inclined relative to said first portion,
said disc (1) being **characterised in that** the contact surface of the fins (2) to the braking band (3') connected to the central bell or hub (4) is smaller than the contact surface of the fins to the other braking band (3").

2. Disc (1) according to claim 1, wherein said second inclined portion (8) extends up to the outer end (2') of the fin.

3. Disc (1) according to claim 1, wherein each fin (2) ends externally with a third radial portion (9).

4. Disc (1) according to any one of claims 1 to 3, wherein the width of the first radial portion (7) is equal to 5-20% relative to the radial extension of the braking bands.

5. Disc (1) according to claim 4, wherein the width of the first radial portion (7) is equal to 8-10% relative to the radial extension of the braking bands.

6. Disc (1) according to any one of the previous claims, wherein the inner ends (2") of the fins are distributed along an inner circumference (5).

7. Disc (1) according to any one of the previous claims, wherein the outer ends (2') of the fins are distributed along an outer circumference (6).

8. Disc (1) according to claims 6 and 7, wherein said inner (5) and outer (6) circumferences substantially coincide with inner and outer circular edges that delimit radially the braking bands.

9. Disc (1) according to one of the previous claims, wherein each pair of adjacent fins (2) defines at least one cooling duct (10), which exhibits an air passage section radially increasing outwards.

10. Disc (1) according to one of the previous claims, wherein the inclination of the inclined portion (8) of the fins (2) is such as to ensure the support of a brake pad on at least a portion of two adjacent fins (2).

11. Disc (1) according to claim 10, wherein the inclination of the inclined portion (8) of the fins (2) is such as to ensure the support of a brake pad on at least two adjacent fins (2).

12. Disc (1) according to claim 10 or 11, wherein the outer end (2") and the inner end (2') of each pair of adjacent fins (2) are radially aligned.

13. Disc (1) according to one of the previous claims, wherein the contact surface of the fins (2) to the braking band (3') connected to the central bell or hub (4) occupies between 45% and 52% of the total inner surface of said band (3').

14. Disc (1) according to one of the previous claims, wherein the contact surface of the fins (2) to the braking band (3") not connected to the central bell or hub (4) occupies between 52% and 60% of the total inner surface of said band (3").

15. Disc (1) according to one of the previous claims, wherein each fin is connected to each braking band through a connecting surface whose tangent forms an angle (11, 12) relative to an axis parallel to the rotation axis (X), and wherein the angle (12) formed with the band (3") not connected to the hub (4) is greater than the angle (11) formed with the band (3') connected to the hub (4).

16. Disc (1) according to claim 15, wherein the angle (12) formed with the band (3") not connected to the hub (4) is equal to two to six times the angle (11) formed with the band (3') connected to the hub (4).

17. Disc (1) according to any one of the previous claims, wherein a braking band (3') is integral to the bell or hub (4).

18. Disc (1) according to any one of the previous claims, wherein the distribution of fins (2) along the inner circumference (5) and/or the outer circumference (6) has a constant pitch.

## Patentansprüche

1. Scheibe (1) für eine selbstbelüftende Scheibenbremse der Art mit zwei Bremsbändern (3`, 3"), von denen wenigstens ein Band (3`) mit einer zentralen Glocke oder Nabe (4) mit einer Drehachse (X) verbunden ist, wobei die Bremsbänder (3`, 3") parallel zueinander angeordnet sind und durch Rippen (2) miteinander verbunden und wechselseitig voneinander beabstandet sind, wobei die Rippen sich in radialer Richtung bezüglich der Drehachse (X) zwischen einem inneren Ende (2") und einem äußeren Ende (2`) erstrecken, wobei jede Rippe (2), beginnend von dem inneren Ende (2"), einen ersten radialen Abschnitt (7) und einen zweiten Abschnitt (8) umfasst, der zum ersten Abschnitt geneigt ist,
wobei die Scheibe (1) **dadurch gekennzeichnet ist, dass** die Kontaktfläche der Rippen (2) mit dem Bremsband (3`), das mit der zentralen Glocke oder der Nabe (4) verbunden ist, kleiner als die Kontaktfläche der Rippen mit dem anderen Bremsband (3") ist.

2. Scheibe (1) gemäß Anspruch 1, wobei der zweite geneigte Abschnitt (8) sich bis zu dem äußeren Ende (2`) der Rippe erstreckt.

3. Scheibe (1) gemäß Anspruch 1, wobei jede Rippe (2) außen in einem dritten radialen Abschnitt (9) endet.

4. Scheibe (1) gemäß irgend einem der Ansprüche 1 bis 3, wobei die Breite des ersten radialen Abschnitts (7) 5% - 20% der Radialerstreckung der Bremsbänder beträgt.

5. Scheibe (1) gemäß Anspruch 4, wobei die Breite des ersten radialen Abschnitts (7) 8% - 10% der Radialerstreckung der Bremsbänder beträgt.

6. Scheibe (1) gemäß irgend einem der vorangehenden Ansprüche, wobei die inneren Enden (2") der Rippen entlang eines inneren Umfangs (5) verteilt sind.

7. Scheibe (1) gemäß irgend einem der vorangehenden Ansprüche, wobei die äußeren Enden (2`) der Rippen entlang eines äußeren Umfangs (6) verteilt sind.

8. Scheibe (1) gemäß Ansprüchen 6 und 7, wobei der innere (5) und der äußere Umfang (6) im Wesentlichen mit der inneren Kreiskante und der äußeren Kreiskante, die die Bremsbänder radial begrenzen, übereinstimmen.

9. Scheibe (1) gemäß irgend einem der vorangehenden Ansprüche, wobei jedes Paar von benachbarten Rippen (2) wenigstens einen Kühlkanal (10) bilden, der einen Luftdurchlassbereich aufweist, der sich radial nach außen vergrößert.

10. Scheibe (1) gemäß irgend einem der vorangehenden Ansprüche, wobei die Steigung des schrägen Abschnitts (8) der Rippen (2) derart ausgelegt ist, dass die Abstützung eines Bremsklotzes an wenigstens einem Abschnitt zweier benachbarter Rippen (2) sichergestellt ist.

11. Scheibe (1) gemäß Anspruch 10, wobei die Neigung des schrägen Abschnitts (8) der Rippen (2) derart ausgelegt ist, dass die Abstützung eines Bremsklotzes an wenigstens zwei benachbarten Rippen (2) sichergestellt ist.

12. Scheibe (1) gemäß Anspruch 10 oder 11, wobei das äußere Ende (2") und das innere Ende (2`) jedes Paares von benachbarten Rippen (2) radial zueinander ausgerichtet sind.

13. Scheibe (1) gemäß irgend einem der vorangehenden Ansprüche, wobei die Kontaktfläche der Rippen (2) mit dem Bremsband (3`), das mit der zentralen Glocke oder Nabe (4) verbunden ist, zwischen 45% und 52% der gesamten Innenfläche des Bands (3`) belegt.

14. Scheibe (1) gemäß irgend einem der vorangehenden Ansprüche, wobei die Kontaktfläche der Rippen (2) mit dem Bremsband (3"), das nicht mit der zentralen Glocke oder Nabe (4) verbunden ist, zwischen 52% und 60% der gesamten Innenfläche des Bands (3") belegt.

15. Scheibe (1) gemäß irgend einem der vorangehenden Ansprüche, wobei jede Rippe mit jedem Bremsband durch eine Verbindungsfläche verbunden ist, deren Tangente einen Winkel (11, 12) bezüglich einer Achse, die sich parallel zur Drehachse (X) erstreckt, bildet, und wobei der Winkel (12), der mit dem Band (3") gebildet wird, das nicht mit der Nabe (4) verbunden ist, größer als der Winkel (11) ist, der mit dem Band (3`) gebildet wird, das mit der Nabe (4) verbunden ist.

16. Scheibe (4) gemäß Anspruch 15, wobei der Winkel (12), der mit dem Band (3") gebildet wird, das nicht mit der Nabe (4) verbunden ist, zweimal bis sechsmal so groß ist wie der Winkel (11), der mit dem Band (3`) gebildet wird, das mit der Nabe (4) verbunden ist.

17. Scheibe (1) gemäß irgend einem der vorangehenden Ansprüche, wobei ein Bremsband (3`) einstückig mit der Glocke oder der Nabe (4) ausgebildet ist.

18. Scheibe (1) gemäß irgend einem der vorangehenden Ansprüche, wobei die Verteilung der Rippen (2) entlang des inneren Umfangs (5) und/oder des äußeren Umfangs (6) eine konstante Teilung aufweist.

## Revendications

1. Disque (1) pour frein à disque à autoventilation du type ayant deux bandes de freinage (3', 3"), dont au moins une (3') est raccordée à une cloche ou à un moyeu central (4) avec un axe de rotation (X), dans lequel lesdites bandes de freinage (3', 3") sont parallèles l'une à l'autre, raccordées et espacées mutuellement par des ailettes (2), dans lequel lesdites ailettes s'étendent dans la direction radiale par rapport à l'axe de rotation (X) entre une extrémité interne (2") et une extrémité externe (2'), dans lequel chaque ailette (2) comprend, en partant de l'extrémité interne (2"), une première partie radiale (7) et une deuxième partie (8) inclinée par rapport à ladite première partie,
ledit disque (1) étant **caractérisé en ce que** la surface de contact des ailettes (2) avec la bande de freinage (3') raccordée à la cloche ou au moyeu central (4) est plus petite que la surface de contact des ailettes avec l'autre bande de freinage (3").

2. Disque (1) selon la revendication 1, dans lequel ladite deuxième partie inclinée (8) s'étend jusqu'à l'extrémité externe (2') de l'ailette.

3. Disque (1) selon la revendication 1, dans lequel chaque ailette (2) se termine extérieurement par une troisième partie radiale (9).

4. Disque (1) selon l'une quelconque des revendications 1 à 3, dans lequel la largeur de la première partie radiale (7) est égale à 5 - 20% par rapport à l'extension radiale des bandes de freinage.

5. Disque (1) selon la revendication 4, dans lequel la largeur de la première partie radiale (7) est égale à 8 - 10% par rapport à l'extension radiale des bandes de freinage.

6. Disque (1) selon l'une quelconque des revendications précédentes, dans lequel les extrémités internes (2") des ailettes sont distribuées le long d'une circonférence interne (5).

7. Disque (1) selon l'une quelconque des revendications précédentes, dans lequel les extrémités externes (2') des ailettes sont distribuées le long d'une circonférence externe (6).

8. Disque (1) selon les revendications 6 et 7, dans lequel lesdites circonférences interne (5) et externe (6) coïncident sensiblement avec les bords circulaires interne et externe qui délimitent radialement les bandes de freinage.

9. Disque (1) selon l'une quelconque des revendications précédentes, dans lequel chaque paire d'ailettes adjacentes (2) définit au moins un conduit de refroidissement (10) qui présente une section de passage d'air augmentant radialement vers l'extérieur.

10. Disque (1) selon l'une quelconque des revendications précédentes, dans lequel l'inclinaison de la partie inclinée (8) des ailettes (2) est telle qu'elle assure le support d'un patin de frein sur au moins une partie de deux ailettes adjacentes (2).

11. Disque (1) selon la revendication 10, dans lequel l'inclinaison de la partie inclinée (8) des ailettes (2) est telle qu'elle assure le support d'un patin de frein sur au moins deux ailettes adjacentes (2).

12. Disque (1) selon la revendication 10 ou 11, dans lequel l'extrémité externe (2") et l'extrémité interne (2') de chaque paire d'ailettes adjacentes (2) sont alignées radialement.

13. Disque (1) selon l'une quelconque des revendications précédentes, dans lequel la surface de contact des ailettes (2) avec la bande de freinage (3') raccordée à la cloche ou au moyeu central (4) occupe 45% à 52% de la surface totale interne de ladite bande (3').

14. Disque (1) selon l'une quelconque des revendications précédentes, dans lequel la surface de contact des ailettes (2) avec la bande de freinage (3") non raccordée à la cloche ou au moyeu central (4) occupe 52% à 60% de la surface totale interne de ladite bande (3").

15. Disque (1) selon l'une quelconque des revendications précédentes, dans lequel chaque ailette est raccordée à chaque bande de freinage par une surface de raccordement dont la tangente forme un angle (11, 12) par rapport à un axe parallèle à l'axe de rotation (X), et dans lequel l'angle (12) formé avec la bande (3") non raccordé au moyeu (4) est supérieur à l'angle (11) formé avec la bande (3') raccordé au moyeu (4).

16. Disque (1) selon la revendication 15, dans lequel l'angle (12) formé avec la bande (3") non raccordée au moyeu (4) est égal à deux à six fois l'angle (11) formé avec la bande (3') raccordée au moyeu (4).

17. Disque (1) selon l'une quelconque des revendications précédentes, dans lequel une bande de freinage (3') est d'un seul tenant avec la cloche ou le moyeu (4).

18. Disque (1) selon l'une quelconque des revendications précédentes, dans lequel la distribution des ailettes (2) le long de la circonférence interne (5) et/ou de la circonférence externe (6) a un pas constant.
